# EUROPEAN PATENT APPLICATION

(11) **EP 2 112 858 A1**
(43) Date of publication of application: **28.10.2009**
(21) Application number: 08007992.4
(22) Date of filing: 25.04.2008
(51) Int. Cl.: H04W 88/02, H04W 4/00

(54) **Method for access selection of a multi-access mobile terminal device based on device velocity**

(71) Applicant: Nokia Siemens Networks Oy, 02610 Espoo (FI)
(72) Inventor: Pöyhönen, Petteri, 00500 Helsinki (FI); Strandberg, Ove, 02520 Lappböle (FI); Tuononen, Janne, 00510 Nummela (FI)
(74) Representative: Bruglachner, Thomas E.

(57) **Abstract**

A method for an access selection process of a multi-access mobile terminal located within a wireless multi-access enabled network environment providing multiple options for wireless access for the mobile terminal device is proposed. The method for the access selection process comprises the step of determining a first quantity V₁ that is relating to the velocity of the mobile terminal device, and the step of selecting or pre-selecting of the available access options for wireless access, wherein the step of selecting or pre-selecting depends on first quantity V₁, which is determined in the first step. The access selection process is proposed to be performed in a handover process or after switching on of the mobile terminal device. Furthermore, a multi-access mobile terminal device which performs the access selection process according to the method and a base station are proposed.

## Description

### Technical Field

The present invention relates to a method for an access selection process of a multi-access mobile terminal device, located within a wireless multi-access enabled network environment providing one or more options for wireless access for the mobile terminal device. The invention further relates to a multi-access mobile terminal device for performing the method for access selection and it further relates to a base station providing one or more access points for the mobile terminal device.

### Background of the Invention

The future of the wireless communication networks is expected to be realized by the use of multi-access enabled networks. In these networks, or more precisely network environments, different radio access technologies (also referred to as RAT) are overlapping and co-operating dynamically and transparently. Here, overlapping is in the sense of a simultaneous vertical and horizontal overlapping, where the horizontal overlapping refers to the geographical overlapping of coverage regions of different access points of the network or the network environment and vertical overlapping refers to the overlapping of different radio access technologies within the network environment. This means that multi-access mobile terminals located in such a multi-access enabled network environment can select any of the available access points and the available radio access technologies for their specific needs and freely perform handover processes between the access points of the same or also different radio access technologies whenever required. Thereby, the specific needs and requirements may be derived from user preferences, services, operator agreements, radio conditions (e.g. signal strength and/or available bandwidth) etc.

In this field, research studies of the EU Ambient Networks project have shown that optimal network utilization and the quality of the service in this kind of multi-access network environments can be reached via sophisticated, continuous and distributed access selection functions which cross the borders of radio access technologies and operators. These access selection functions will not only be guided by comparison of radio signal strengths (as may be sufficient for one network only providing horizontal handovers), but also many other additional constraints and triggers. These can be given by end-user application preferences or also operator co-operation.

An illustrative example for a possible realization is a multi-access mobile node or a multi-access notebook that allows wireless connections to different radio access technologies as there may be for example 2G and/or 3G technologies and also a short range radio access technology such as for example WLAN.

### Summary of the Invention

One of the objects of the present invention is to avoid inadvisable and/or inappropriate access selection for establishing a wireless connection between a moving multi-access mobile terminal device and one of the access options of the mobile terminal device. In the following, it shall be precisely defined what is meant by considering a specific access selection to be inappropriate. The term "access selection" comprises either the selection of one or more of the available access options of the mobile terminal device with the result of establishing a new connection, or the rejection of one or more of the access options of the mobile terminal device resulting in either maintaining a former connection or maintaining a state of being without connection. It will be defined in more detail later.

For instance, a selection of an access option for establishing a connection with the mobile terminal device is considered to be inappropriate if the velocity of the mobile terminal device exceeds the maximum speed supported by that access option. Furthermore, an access selection of the access option is also considered to be inappropriate if the velocity of the mobile terminal device is such that it leaves the coverage area of the access option before the connection can be completely established. Additionally, even if a connection can be completely established, the mobile terminal device can be travelling at a velocity that does not allow for maintaining the connection long enough in order to allow for a practical or meaningful usage of the connection until the mobile terminal device leaves the coverage area of the access. Consequently, in this case the access selection is also considered to be inappropriate.

A further object of the present invention is to solve the problem of unnecessary radio scanning of access options in the actual range of the mobile terminal device. This might happen when the mobile terminal device is radio scanning for available access options that are considered to be inappropriate for access selection due to the velocity of the mobile terminal device in the abovementioned sense.

A further object of the present invention would be to economize the access selection processes of the mobile terminal device so that time and battery power can be saved.

A further object of the present invention is to solve the abovementioned problems in the access selection processes during a handover process from one access option to another. These include intra-RAT handovers (horizontal handovers), inter-RAT handovers (vertical handovers), and also inter-operator handovers. The procedures of the handovers furthermore potentially generate latencies and gaps in the user data flows and therefore affect to perceived service quality. Therefore, it is important to solve the problems of optimizing the use of handovers, i.e. choose wisely to which access point or radio access technology and when to try to initiate handovers.

A further object of the present invention is to solve the problem of inappropriate access selection for establishing a wireless connection between a multi-access mobile terminal device and one of the access options of the mobile terminal device if not only the mobile terminal device is mobile, but also at least one of the access points comprised in the available access options is part of a movable network. Here, the access selection is considered to be inappropriate as in the above mentioned sense, however not only depending on the velocity of the mobile terminal device, but rather on the relative velocity between the mobile terminal device and the access point of the movable network.

In order to achieve the above defined objects, the invention proposes a method for an access selection process of a multi-access mobile terminal device located within a wireless multi-access enabled network environment providing one or more options for wireless access for the mobile terminal device. It is proposed that the method comprises the step of determining a first quantity V₁ relating to a velocity of the mobile terminal device and the step of selecting or pre-selecting one or more of the options for wireless access depending on the determined first quantity V₁.

The method of the invention has the advantage that the determined first quantity V₁ relates to the velocity of the mobile terminal device which then can be considered in the step of selecting or pre-selecting one or more of the access options. So it can be distinguished if the selection or pre-selection of an access option is appropriate or inappropriate in the abovementioned sense. Consequently, inappropriate access selection can be avoided and/or prevented.

The nature of the first quantity V₁ is not necessarily the exact value of the velocity of the mobile device. As a possible alternative, it can also be an estimate value of the velocity, an average value of the velocity, or even just a Boolean variable (like for example a bit "0" or "1") indicating if the mobile terminal device is moving or not, or if the velocity of the mobile terminal device is above or below a predetermined threshold value of the velocity. It can further refer to the absolute value of the velocity of the mobile terminal device and/or comprise directional information. Directional information may have the advantage that a misinterpretation can be avoided. In the case of a mobile terminal device and a base station providing an access option are moving at the same or approximately the same velocity but in two different directions (e.g. on two different trains/cars/buses travelling in opposite direction) a misinterpretation might occur if only the absolute value of the velocities would be considered. The access selection of that access option might accidentally be classified as appropriate although in fact it might be highly inappropriate, since the actual relative velocity between the base station and the mobile terminal device would be approximately twice as high as one of the single velocities.

Moreover, it is proposed that the options for wireless access comprise at least two different access points (AP). In this case, the access selection procedure may be rendered particularly transparent even if multiple options are available concurrently and the mobile terminal device has to decide during the access selection process if a horizontal handover between the different access points is appropriate or inappropriate in the abovementioned sense. Access points may be embodied as different base stations or different access points comprised of a single base station.

Furthermore, if at least two of the different access points provide access with different radio access technologies (RAT), the invention may provide a velocity-specific access and could be applicable to decide whether a vertical handover between access points of different radio access technologies is appropriate or not in the abovementioned sense.

It is proposed that the method of the invention further comprises a step of radio scanning one or more of the options for wireless access. In this case, the step of radio scanning may be based on the step of pre-selecting and the step of radio scanning can depend on the determined first quantity V₁.

It is further proposed that the step of pre-selecting comprises an exclusion or inclusion of one or more radio access technologies from or to the step of radio scanning. Consequently, the step of radio scanning may be optimized by restricting the step of radio scanning to radio access technologies that are expected to allow for an appropriate access selection if the first quantity V₁ is considered. By including this feature, time and battery power could be saved during the step of radio scanning.

Additionally, the step of pre-selecting may comprise an evaluation of one or more radio access options and a determination of a scanning sequence of access options for the step of radio scanning based on the evaluation. By this procedure it could be guaranteed that no access options are left out of the step of radio scanning. However, radio access technologies that appear more promising for access selection after consideration of the first quantity V₁ can be radio scanned before less promising radio access technologies and possibly also time and power could be saved.

As an example of ordering of the scanning sequence it is proposed that when the mobile terminal device is moving slowly or even stands still, short range radio access technologies like WLAN should be scanned before wide area radio access technologies, if other access selection constraints allow this.

In order to optimally evaluate the radio access technologies in the step of selecting or pre-selecting, it may be desirable to consider specific velocity range recommendations for the radio access technologies in the step of selecting or pre-selecting.

Furthermore, it is proposed for the step of determining the first quantity V₁ that V₁ is determined by a means provided in the mobile terminal device. The method of the invention could then be carried out by the mobile terminal device without the necessity of an external determination of the first quantity V₁. This means should have a suitable size, i.e. be of equal or smaller size than the mobile terminal device itself. In other words, it should be small enough to be attached to or integrated into the mobile terminal device. There are various imaginable technological embodiments that could perform or support a determination of the first quantity V₁ such as for example a system based on satellite navigation such as GPS, wherein the system is additionally utilized to work as a speed monitor, an acceleration transceiver working as a speed estimation monitor, a device using the Doppler effect to estimate the speed by through frequency examination of received signals from one or more of the access points, or any other device small enough to be attached to or integrated into the mobile terminal device.

Alternatively, it is proposed that the step of determining the first quantity V₁ comprises the reception of an external signal from at least one of the access points in the actual access range of the mobile terminal device in order to determine the first quantity V₁. By that the first quantity could also be determined by using external information, as for instance an external position estimation or measurement. This could be performed through a signal triangulation measurement but also implementations based on satellite navigation such as GPS could be used.

Furthermore, the method of the invention may be carried out for the access selection process that is performed for a handover process between different access points. Thus, an access handover to specific radio access technologies could be prevented or initiated if the velocity of the mobile terminal device is within or without the recommended velocity ranges of the specific radio access technologies. Additionally, the proposed method for an access selection process may be performed upon an initial access after switching-on of the mobile terminal device. However, in this case it may not be advisable to exclude one or more of the radio access technologies from the step of radio scanning because after switching on the mobile terminal device preferably all available access options should be scanned. However, it still may be preferable to have an evaluation of access technologies for the step of radio scanning.

It is further proposed that the first quantity V₁ might relate to an average value of the velocity of the mobile terminal device. This could be required to ensure that the consideration of the first quantity in the steps of selecting or pre-selecting is accommodated to the situation of the mobile terminal device without regarding temporary changes. For instance a situation may occur, where the user of the mobile terminal device is travelling with a vehicle and has to stop or slow down temporarily (e.g. a due to a traffic sign if travelling by car or a station stop if travelling by bus or train). For such a temporary stop or slow down it may not be appropriate to handle the access selection as if the mobile terminal device is at rest (although it actually may be at rest for a short period of time). This problem could be overcome if the first quantity would be related to an averaged velocity of the mobile terminal device.

Since it may happen that the access options may comprise access points that are part of a movable network it may be preferable if the relative velocity between access points and the mobile terminal device is considered rather than the first quantity V₁ alone. Therefore it is proposed that the method of the invention may further comprise the step of determining a second quantity V₂ relating to a velocity of an access point, wherein the step of pre-selecting or selecting is depending on the first quantity V₁ and the second quantity V₂. Consequently, a situation could be prevented respectively avoided, wherein a radio access technology is disregarded because of the velocity of the mobile terminal device, although the velocity of the respective access point is allowing for an appropriate access selection. This scenario may occur in the situation, where the user is travelling with a vehicle and the vehicle is providing an access point of a movable network. In this case the relative velocity could be zero, i.e. the relative movement of the mobile terminal device and the access point might be negligible, although neither the mobile terminal device nor the access point is actually at rest. Even if the access point is providing access with a short range radio access technology that typically should be discarded at higher velocities of the mobile terminal device, it may be the most preferable access point for access selection due to the negligible relative velocity.

The nature of the second quantity V₂ is also not necessarily the exact value of the velocity of the respective access point. It can further be an estimate value of the velocity, an average value of the velocity, or even just one or more Boolean variables (like for example a bit "0" or "1") stating if the access point is moving or not, and/or if the velocity of the mobile terminal device is above or below a predetermined threshold value of the velocity, and/or if the access point is part of a moving network or not. The second quantity can further refer to the absolute value of the velocity and/or comprise directional information.

However, the step of determining the second quantity V₂ may be required to comprise the reception of a signal transmitted from the access point or a base station providing the access point. The second quantity V₂ may further be related to an average value of the velocity of the access point. As described further above, in cases where temporary stops may occur, this feature could be required to ensure that the consideration of the second quantity in the steps of selecting or pre-selecting is accommodated to the actual situation.

In a simple implementation, the second quantity V₂ may be a Boolean variable representing the state of movement or the state of stoppage of an access point provided within a movable network. In this scenario a moving mobile terminal device in the range of a moving access point of a movable network could be automatically attributed to the assumption of a combined movement of the mobile terminal device and the access point. This might be an appropriate assumption and remain valid in a lot of imaginable scenarios. However, it could be preferable that already during the step of radio scanning the mobile terminal device would be informed that it is in the range of a movable network. Therefore, the data of the received system information signal of the respective access point that is picked up by the mobile terminal device during the step of radio scanning could already comprise the information, if the access point is provided within a movable network. An alternative solution for informing the mobile terminal device that it is in the range of a movable network could be the usage of the technology of radio frequency identification (RFID). In such a scenario, one or more of the access point of the movable network may be provided with a RFID transceiver chip and the mobile terminal device could be provided with a RFID receiver chip to receive the RFID signal from one or more of the access points.

As already mentioned, the proposed method of the invention may be most advantageous in the case of access selection where the access options of the mobile terminal device comprise short range radio access technologies. This is because short range radio access technologies may provide inappropriate access options in the case of a mobile terminal already moving faster than the speed of walk. Accordingly, the method may be especially used when one ore more of the access options is an access point for a short range radio access technology, such as for example the radio access technology of WLAN.

According to a further aspect of the invention, a multi-access mobile terminal device is proposed, wherein the multi-access mobile terminal device is configured for connecting to a plurality of options for wireless access. The multi-access mobile terminal is further configured to carry out the method proposed in the present invention. This mobile terminal device can be a multi-access mobile node or a multi-access notebook device allowing for wireless access. It is proposed that the multi-access mobile terminal device comprises a first quantity determination means for determining a first quantity V₁ relating to a velocity of the mobile terminal device and a selection means, communicating with the first quantity determination means, for selecting or pre-selecting one or more of the options for wireless access depending on the determined first quantity V₁. As mentioned above, there are various technological possibilities how the first quantity determination means could be realized. Also, it could be a single device or a combination of a plurality of different devices. However, it may be preferred to be small enough to be attached to the mobile terminal device. Even a partial or full software realization is imaginable since the determination may comprise steps of numerical calculation. For instance, a time measuring means combined with a position measurement or position determination means would require further numerical calculations to obtain an implied value for the velocity. Additionally, the selection means could be realized either as a single hardware device, a combination of a plurality of hardware devices, a software realization, or the combination of hardware and software. It is further imaginable that only one single device within the mobile terminal device performs a plurality or even all of the steps comprised of the method according to the present invention. It is not the scope of the invention

It is further proposed that the mobile terminal device may comprise at least one radio scanning means, communicating with the selection means, for radio scanning of the options for wireless access. Furthermore, at least one radio scanning means may comprise at least two radio scanning interfaces, wherein each of the radio scanning interfaces may be configured to radio scan for one of the different radio access technologies. In this case the mobile terminal device may allow for access to more than just one radio access technology and the use of the method of the invention may become advantageous for vertical handovers between access points of different radio access technologies.

Furthermore, it is proposed that the first quantity determination means comprises a measurement means for determining the first quantity V₁ based on a measurement of the velocity of the mobile terminal device. The measurement means could be a speed monitor based on satellite navigation such as GPS, an acceleration transceiver as speed monitor estimator, a device comprising a radio interface for observing the Doppler effect in frequency measurements of received signals, or any other imaginable technological realization. A possible alternative to a measurement means could be a receiving means comprised by the first quantity determination means or that the first quantity determination means communicates with at least one of the radio scanning interfaces. Then, the determination of the first quantity could comprise the reception of an external signal from at least one of the access points. For instance, the position or velocity information of the mobile terminal device could be determined by an external means that might be provided by the access points. A triangulation of the signal of the mobile terminal device could be an alternative method to determine the position of the mobile terminal device and then the velocity estimation or measurement may be carried out by the first quantity determination means, after or during the reception of the external signal or the regular reception of a plurality of signals.

As pointed out in the description of the proposed method of the invention, a scenario may occur wherein the first quantity determination means should determine the first quantity V₁ relating to an average velocity of the mobile terminal device. This may comprise a software realization for calculating the average value based on a regular estimate or measurement of the velocity of the mobile terminal device. As described above for the proposed method of the invention, this may prevent a misinterpretation or a misjudging of the situation if a temporary stop, slow down, or acceleration occurs during the movement of the mobile terminal device.

The mobile terminal device is further proposed to comprise a second quantity determination means communicating with the selection means, for determining a second quantity V₂ relating to a velocity of one or more access points in the actual access range of the mobile terminal device, wherein the selection means selects or pre-selects one or more of the options for wireless access based on the first quantity V₁ and the second quantity V₂. This may become necessary if also access points that are part of a movable network are comprised in the access options of the mobile terminal device. In such a scenario it would be preferable to carry out the step of selecting or pre-selecting depending on the relative velocity of access points and the mobile terminal device and it may be appropriate to consider the first and the second quantity concurrently.

The second quantity determination means may comprise a receiving means as for example a radio interface or it may communicate with at least one of the radio scanning interfaces of the radio scanning means for receiving an external signal from at least one of the access points relating to the second quantity V₂.

Furthermore, it may be advantageous if the second quantity determination means determines the second quantity V₂ relating to an average velocity of one or more access points. This could be used to prevent the mobile terminal device to perform an inappropriate access selection of access points or radio access technologies if the movable network is in the state of a temporary stop or slow down while the mobile terminal is at rest independent of the movable network. Such a scenario might for example occur if the user with the mobile terminal device is at a bus stop and a bus providing one or more access points of a movable network stops temporarily at that bus stop while the user is waiting for another bus. In this case, it may not be advisable that the mobile terminal device access selects one of the access points provided with the bus because the stop is only temporary.

Consequently, it is proposed to have different performance rules for the step of selection or pre-selection depending on the different imaginable situations. Thus, the mobile terminal device of the invention may comprise a storage means communicating with the selection means for data storing of one or more rules for access selection or pre-selection based on the first or second quantity. These rules may comprise the recommendations for the velocity ranges for specific radio access technologies. Furthermore, the rules may comprise different instructions for the access selection process in a handover or in the access selection process directly after switching-on the mobile terminal device. This is due to the condition that it may be preferable to radio scan all available access options in the actual range of the mobile terminal device for the access selection process after switching on and not to exclude any of the accessible radio access technologies. Otherwise, it may be possible to miss a promising access option. An example of such a situation could be the switching on of the mobile device if already moving at high speed at a train where the train provides one or more access points of a short range radio technology. In this situation, the particular radio access technology should not be excluded from the step of radio scanning. The various rules for the access selection process may also comprise instructions for the evaluation of radio access technologies and the ordering sequence for the step of radio scanning. Further, the rules may also comprise instructions for software applications as for example instructions for determining the first quantity or the second quantity relating to an averaged velocity of the mobile terminal device. These instructions could also include the fixed or variable time intervals over which the velocity should be averaged. The rules may be derived by operator settings, device settings, or different policies as for instance "safe battery" or "safe time" policies.

In addition, it is preferable that rules for selecting or pre-selecting that are stored in the storage device can be manually adjusted by the user. It is proposed for the mobile terminal device of the invention to further comprise a user interface means communicating with the selection means for allowing user-adjustment of access selection or pre-selection rules for the selection means. This user interface means should allow for a user's choice or a user's modification of one or more of the access selection or pre-selection rules from the rules stored by the storage means.

As described further above, the access selection process after switching on the mobile terminal device may be preferred to differ from the access selection process in a handover. So, it is further proposed that the selection means may be configured to automatically disregard the determination of one or both of the first and second quantity for establishing a first connection to one or more access points after switching-on the mobile terminal device. It is further possible to provide means to manually disable this automatic selection rule should by the user through the user interface means.

According to a further aspect of the invention, a base station is proposed that provides one or more access points allowing for one or more multi-access mobile terminal devices to access one or more of the access points, wherein a radio interface means provided by the base station is transmitting a signal comprising the second quantity V₂, related to a velocity of the base station and the access points provided with the base station. This is required for a mobile terminal device performing the access selection process as proposed with the present invention, wherein also the determination of a second quantity is comprised.

It is proposed that the signal may comprise the information if the access point is part of a movable network. This can be achieved by the inclusion of an information bit to the system specification signal that can be scanned in the step of radio scanning of the mobile terminal device or a different signal emitted by a radio frequency identification (RFID) chip and collected by the mobile terminal device.

Furthermore the second quantity V₂ may be a Boolean variable representing the state of movement or the state of stopping of the base station or also it may be relating to an average velocity of the base station and the access point provided with the base station. The second quantity may refer to an absolute value of the velocity and/or comprise directional information of the velocity.

As mentioned above, the method of the invention may be most advantageous in the case where at least one of the access options in the range of the mobile terminal device is an access point of a short range radio access technology. Therefore it is proposed that the base station of the invention may provide one or more access points of a short range radio access technology, such as for example the radio access technology of WLAN.

### Brief Description of the Drawings

Fig. 1 shows a schematic view of a wireless multi-access enabled network environment.
Fig. 2 shows a flow chart illustrating the steps that are comprised in the method according the first embodiment of the present invention.
Fig. 3 shows a flow chart illustrating the steps that are comprised in the method according to the second embodiment of the present invention.
Fig. 4 shows a flow chart illustrating the steps that are comprised in the method according to the third embodiment of the present invention.
Fig. 5 shows a flow chart illustrating the steps that are comprised in the method according to the fourth embodiment of the present invention.
Fig. 6 shows a schematic view of a multi-access mobile terminal device according to a fifth embodiment of the present invention.
Fig. 7 shows a schematic view of a bus providing a movable network.
Fig. 8 shows a schematic view of a bus providing a base station according to a sixth embodiment of the present invention.

### Description of the Figures and of Preferred Embodiments

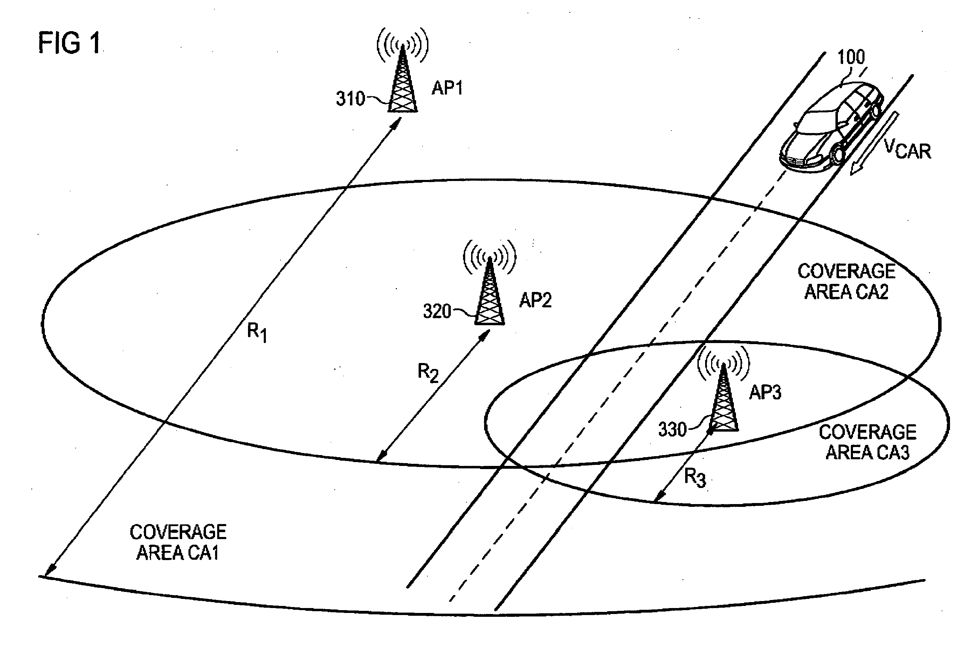

Fig. 1 shows a schematic of a wireless multi-access enabled network environment providing multiple access options for a multi-access mobile terminal device. A base station 310 comprises an access point AP1. The base station 310 is surrounded by a circular coverage area CA1 with the radius R₁. It should be noted, that the coverage area may not be exactly circular in a real scenario and rather be geographically distorted due to obstacles like for example buildings or mountains. However, when a multi-access mobile terminal device is located within the coverage area CA1, it can access select the access point AP1 to establish a wireless connection. A user of a mobile terminal device is travelling in his car 100 at a velocity V_{CAR} along a street and is within the coverage area CA1. The mobile terminal device has established a connection to the AP1 at the base station 310. Two additional base stations 320 and 330 are located nearby the street. Each of the base stations 320 and 330 is surrounded by the respective coverage area CA2 and CA3 and provides a respective access point AP2 and AP3. As can be seen from Fig. 1, there is a hierarchy of coverage areas, i.e. the coverage areas shown in Fig. 1 are not of the same size. The radius R3 of coverage area CA3 is smaller than the radius R2 of coverage area CA2, which itself is smaller than the radius R1 of coverage area CA1. This can be due to different radio access technologies or due to a hierarchy of coverage ranges between access points of one specific radio access technology.

In the example situation of Fig. 1, the mobile terminal device in the car 100 will temporarily enter the coverage areas CA2 and CA3 before it leaves the coverage area CA1. It will then be theoretically possible to perform an access selection process and possibly initiate a handover from the established connection with the access point AP1 of the base station 310 to a new connection with either the access point AP2 or the access point AP3. According to the present invention, the velocity of the mobile terminal device, which in this situation is equal to the velocity V_{CAR}, will be considered for the access selection process. Within the access selection process a mobile terminal device according to the present invention will decide if access selection to either of the access points AP2 or AP3 is appropriate.

In principle, for being advantageous the method for an access selection process of a multi-access mobile terminal device located within a wireless multi-access enabled network environment providing one or more options for wireless access for the mobile terminal device according to the present invention can already be carried out in a scenario where only one access point AP1 of one particular radio access technology is in the range of the mobile terminal device and the mobile terminal device is located within the coverage area CA1 of the access point AP1.

In such a scenario, the method according to an aspect of the present invention comprises the step of determining a first quantity V₁ relating to a velocity of the mobile terminal device and the step of selecting or pre-selecting one or more of the options for wireless access depending on the determined first quantity V₁. In the first step, the first quantity V₁ is determined. The first quantity V₁ in one of the simplest implementations of the present invention is just a Boolean variable, i.e. it is either "0" if the mobile terminal device is moving at a velocity below or equal to a certain predetermined threshold value or "1" if the mobile terminal device moving at a velocity higher than the predetermined threshold value. The threshold value is chosen such, that if the mobile terminal device is moving at a velocity smaller than the threshold value, an access selection of the access point AP1 can be considered to be appropriate. Appropriate access selection is given when the time which is required to establish a connection to that access point is considerably smaller than the time that is required to pass through the coverage area of the access point at a velocity equal to the threshold value. Furthermore, appropriate access selection requires that the time interval that is needed for passing through the coverage region of the access point at a velocity equal to the threshold value already allows for a meaningful usage of the connection since it corresponds to the maximal time interval that allows for maintaining the connection (neglecting the time for establishing the connection which is typically considerably smaller than the time that is needed for maintaining a meaningful connection). Finally, the threshold value has to be determined such that velocities of the mobile terminal device below the threshold value are supported by the radio access technology of the access point. For velocities above the threshold value, access selection cannot be considered to be appropriate. In practise, appropriate access selection is most important for access points which provide access to a short range radio access technology such as for instance a WLAN. For such a short range radio access technology the threshold value for the velocity of the mobile terminal device would be typically close to the speed of walk. If a velocity of the mobile terminal device is determined to be larger than the predetermined threshold value, then the step of selecting leads to a rejection of a connection to the access point according to a first embodiment of the invention. Otherwise, if the velocity of the mobile terminal device is determined to be smaller than the threshold value, then the step of selecting leads to establishing a connection to the access point.

If more than one access point are comprised in the access option of the mobile terminal device the method for access selection according to the present invention can be additionally performed in access selection for handover processes. The situation can be given as illustrated in Fig. 1 with a plurality of access points AP1, AP2, and AP3 with horizontally overlapping coverage areas CA1, CA2, and CA3. The mobile terminal device will be located within a plurality of the coverage areas CA1, CA2, and CA3 of the access points AP1, AP2, and AP3 as soon as the car 100 enters intersections of the coverage areas CA1, CA2, and/or CA3 down the street. This means that the mobile terminal device can select one of the access points AP1, AP2, and/or AP3 for establishing a connection. If the mobile terminal is already maintaining a connection with the access point AP1 and is trying to establish another connection to the access point AP2 or AP3 this would be access selection for a handover process. On the other hand, if the mobile terminal is not connected before the method according to the present invention is performed, it will be referred to as establishing a first connection as for instance would be necessary after switching on the mobile terminal device.

It shall be again emphasized that access selection in a handover does not necessarily mean that a new connection is established and the former connection is terminated. Access selection in a handover process can also according to the terminology refer to a process where alternative access points for establishing a new connection are rejected and the former connection is maintained. Further, the present invention may be applied to both, hard and soft handovers. In other words, the method according to the present invention is not limited to a certain order of the step of termination of the former connection and the step of establishing of the new connection if the method is applied in a handover process.

The method of the present invention can be used to optimize the access selection in a handover process if one or more access points provide the possibility of an alternative connection. This holds true for the scenario of Fig. 1, where it is illustrated that the access points follow a hierarchy of coverage ranges (R₁>R₂>R₃), i.e. they do not provide coverage areas of the same diameter. This can be due to either different radio access technologies or a range hierarchy of different access points of one specific radio access technology. The optimal access point for establishing a new connection can be selected under consideration of the velocity of the mobile terminal device.

In the following preferred embodiments of the present invention will be described and further details of the invention will be given. Furthermore, some of the preferred embodiments are also illustrated in the figures and will be described by referring to the figures.

### First Embodiment:

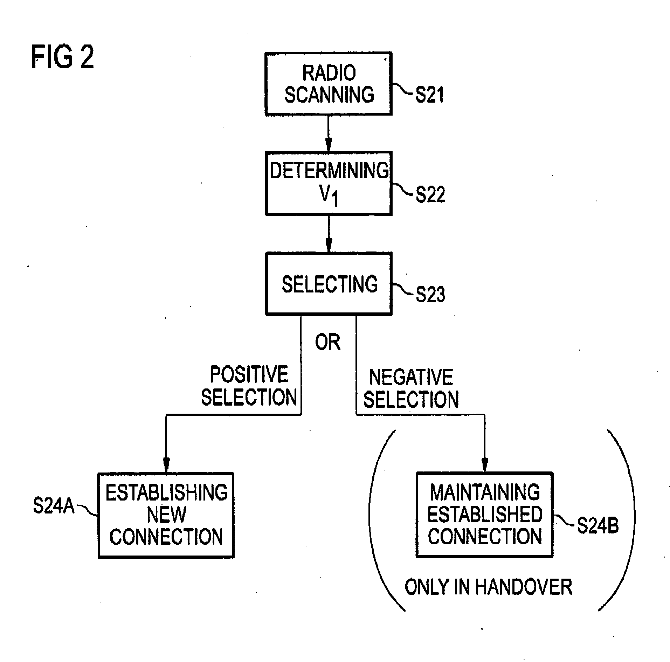

Fig. 2 illustrates a method for access selection process of a multi-access mobile terminal device located within a wireless multi-access enabled network environment providing multiple options for wireless access for the mobile terminal device according to a first embodiment of the present invention. The access options of the mobile terminal device comprise a plurality of access points in the actual range of the mobile terminal device and the plurality of access points provide access to different radio access technologies. The method comprises the step S21 of radio scanning, the step S22 of determining a first quantity V₁ relating to a velocity of the mobile terminal device, and the step S23 of selecting the options for wireless access depending on the determined first quantity V₁.

In the step S21 of radio scanning, the mobile terminal device radio scans and identifies the access options in its actual range. These access options generally comprise different access points of different radio access technologies. Since the mobile terminal is multi-access enabled, it is able to access different access points of different radio access technologies as long it is located in the coverage area of the respective access points. The size of the coverage area typically depends on the specific radio access technology. However, also access points of one radio access technology can provide coverage areas of different sizes. According to the first embodiment of the present invention, the mobile terminal first performs the step S21 of radio scanning, then within the step S22 the first quantity V₁ is determined. The first quantity is relating to the velocity of the mobile terminal device, i.e. in this embodiment it is the measured value of the velocity (up to a certain accuracy of the measurement). After the step S22 of radio scanning all available access options in the actual range of the mobile terminal device are known to the mobile terminal device. The step S22 of radio scanning is followed by the step S23 of selecting one of the access options for wireless access of the mobile terminal device.

The step S23 of selecting the access options comprises the following features:
- access selection after or during the step S21 of radio scanning of available access points with the result of establishing a first connection with one of the available access points after switching-on the mobile terminal device;
- access selection after or during the step S21 of radio scanning of available access points with the result of establishing a new connection with one of the available access points and terminating the former connection in a handover process (not necessarily in that order, i.e. not restricted to either a hard or a soft handover); and
- access rejection after or during the step S21 of radio scanning of available access points with the result of maintaining the former connection and not establishing a new connection in an attempted handover process.

In other words, the step S23 for access selecting leads either to establishing a new connection where the access point for the new connection is selected (possibly also chosen out of a plurality of different accessible access points) or it leads to refusing a new connection to one or more of the access options. So, according to that definition it is possible that the step S23 of selecting leads to a state of the mobile terminal device where there exists no established connection after the step S23 of selecting. However the typical scenario is that a new connection is established after the step S23 of selecting which is referred to as step S24A of establishing a new connection in Fig. 2. In the following, this will be also referred to as "positive selection".

If the method according to this embodiment of the present invention is performed in a handover process, there is another possibility that the already established connection turns out to be the optimal connection out of all the access options in the actual range of the mobile terminal device. In that case the step S23 of selecting also can be followed by maintaining S24B of the already established connection rather than establishing a new connection S24A. In the following, this step S24B will be also referred to as "negative selection". However, it has to be kept in mind that such a step can only occur in a handover process and not after switching on the mobile terminal device.

According to the present invention, the step S23 of selecting one or more of the access options in the above defined sense is depending on the first quantity V₁, i.e. the velocity of the mobile terminal device according to this embodiment of the present invention. Usually the step of selecting according to the related art depends on the signal strength of the signals from the available access options and also for instance the available bandwidth if different radio access technologies are available. Here, the velocity of the mobile terminal device is additionally considered. This particularly means that specific access points or radio access technologies of the available access options are rejected in the step S23 of selecting, if the velocity of the mobile terminal is either not in the range supported by the specific radio access technology, or the velocity of the mobile terminal device is too large (larger than the predetermined threshold value) for allowing to establish a connection or for allowing a meaningful usage of the connection during the time that is needed to pass through the coverage region of the respective access points.

In other words, only connections to access points of radio access technologies that support the determined velocity of the mobile terminal device are considered for positive selection if also the velocity is below the respective threshold value. This way it is guaranteed that a connection can be established in due time and a meaningful usage of the connection is possible because the speed of the mobile terminal device does not lead to an early leaving of the coverage area of the access point too soon.

### Second Embodiment:

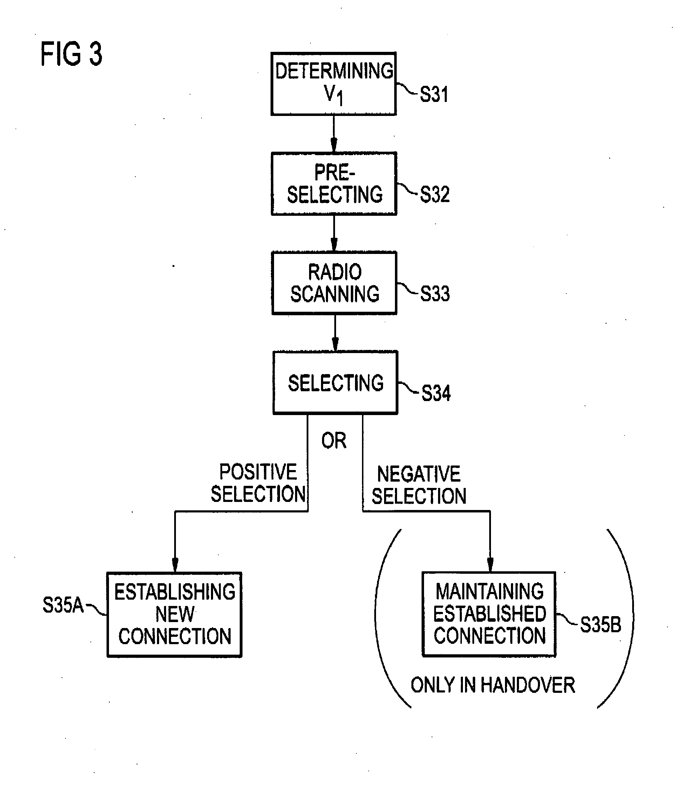

A method for an access selection process according to a second embodiment of the invention is illustrated in Fig. 3. In comparison to Fig. 2 it can be seen that in this embodiment of the present invention it is proposed to have the step S31 of determining the first quantity V₁ at the beginning of the complete access selection process. It is followed by a step S32 of pre-selecting the available access options of the mobile terminal device, followed by the step S33 of radio scanning. Here, in the second embodiment of the invention, the mobile terminal device is configured to radio scan for different radio access technologies.

The term "pre-selecting" in the step S32 of pre-selecting refers to the attribute that it is a step that takes place before the step S33 of radio scanning, whereas the step S34 of selecting happens after the step S33 of radio scanning. The step S32 of pre-selecting comprises an evaluation of the different radio access technologies theoretically accessible by the mobile terminal device.

In other words, after the velocity of the mobile terminal device has been determined in the step S31 of determining the first quantity V₁ it is checked which of the theoretically accessible radio access technologies support the determined velocity of the mobile terminal device. It is checked, if the access points of the respective access points and the coverage area provided by these access points allow for an appropriate access selection.

Based on the evaluation in the step S32 of pre-selecting, a sequence ordering of radio access technologies for the step S33 of radio scanning is determined depending on the determined first quantity and recommendations of velocity ranges for the specific radio access technologies. Radio access technology standards define speed ranges, where the specific radio access technology must be operational. These ranges are typically quite big and more fine grained definitions are needed. However, it is not in the scope of this invention to make detailed definitions concerning the velocity range recommendations. After considering the velocity recommendations, the most promising radio access technology is scanned first, the second most promising radio access technology is scanned second, and so on.

After the step S32 of pre-selecting the method for an access selection process according to the second embodiment is similar to the method according to the first embodiment illustrated in Fig. 2. The step S33 of radio scanning is followed by the step S34 of selecting which can have the outcome of positive or negative selection leading to either the step S35A of establishing a new connection or the step S35B of maintaining an established connection in a handover process. Again, as was the case for the method according to the embodiment of Fig. 2, after switching on of the mobile terminal device only a new connection can be established or in case of a negative selection no connection would be established.

The step S32 of pre-selecting further can comprise the exclusion or inclusion of specific radio access technologies from or to the step S33 of radio scanning, depending on the determined first quantity V₁. In other words, if the velocity of the mobile terminal device determined in step S31 is not supported by a specific radio access technology or the coverage areas of the access point of the specific radio access technology do not allow for an appropriate access selection at the determined velocity of the mobile terminal device, then that specific radio access technology is excluded from the step S33 of radio scanning. This may be achieved by disabling of the respective radio interface of the mobile terminal device that is configured to scan for the specific radio access technology. If the velocity is appropriate for this specific radio access technology then it is included again in the step S33 of radio scanning in a next execution of an access selection process according to this embodiment of the present invention.

### Third Embodiment:

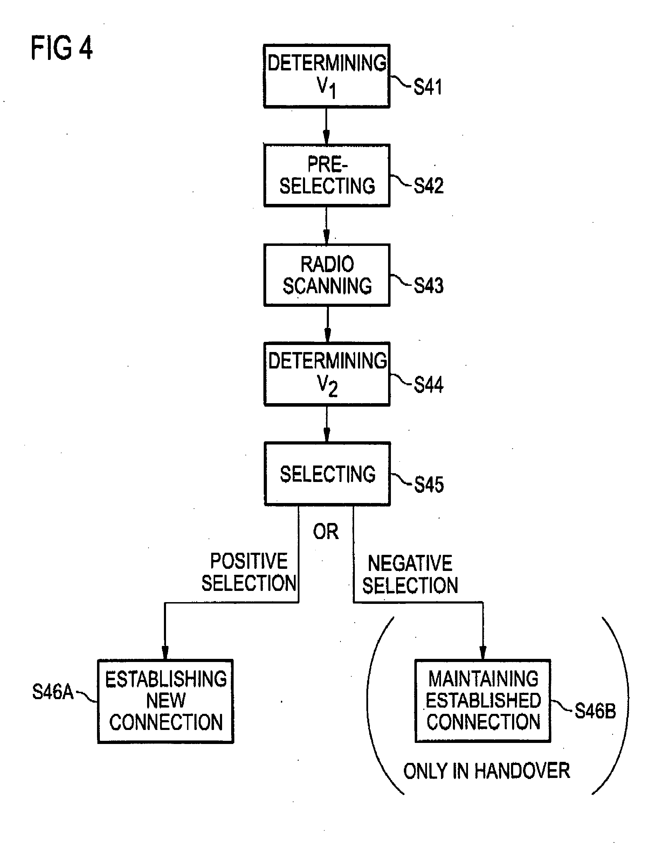

According to a third embodiment of the present invention that is illustrated in Fig. 4, an additional step S44 of determining a second quantity V₂ is comprised in the method of an access selection process. The step S44 of determining the second quantity V₂ appears between the step S43 of radio scanning and the step S45 of selecting one or more of the access options. The second quantity is relating to the velocity of one of the access points.

The reason for determining the second quantity is that for the decision, if the access option allows for an appropriate access, not alone the velocity of the mobile terminal device, but also the velocity of the access point is to be considered. This is due to the fact that the relevant quantity actually is the relative velocity between the mobile terminal device and the access point. In most cases it is safe to assume that the access point or respectively the base station that provides the access point is fixed and at rest.

However, there might occur a situation where the mobile terminal device is located within a multi-access network environment that comprises at least one movable network with movable access points. Such a situation could be given by a movable network provided on a bus or a train. Consequently, the method of the present invention is accommodated to that kind of a situation in the third embodiment illustrated in Fig. 4.

Basically, the only difference to the embodiment of Fig. 3 is the additional step S44 of determining the second quantity and that the step S45 of selecting is additionally depending on the determined second quantity. Here, the second quantity is relating to the velocity of the access point.

The second quantity according to an aspect of this embodiment can be a Boolean variable "0" or "1" that is transmitted within the system specification signal by the access point that is then picked up by the mobile terminal device in the step S43 of radio scanning. The Boolean variable is referring to the velocity of the access point, i.e. if it is above or below a predetermined threshold value. In most cases, it is fair to assume that a moving mobile terminal device in direct access range of a moving access point of a movable network is moving together as for instance on a bus or train. However, for allowing a more accurate comparison of the velocities of the mobile terminal device and the access point the second quantity V₂ is proposed to be an estimate and/or measurement of the velocity of the access point according to a further possible alternative of the third embodiment of the present invention.

By performing the method according to the third embodiment of the invention, the step S44 of determining the second quantity appears after the step S43 of radio scanning. This is necessary since the information of the second quantity is received by an external signal from the access point. The information with respect to the second quantity is comprised within the specification signal of the access point that is picked up in the step S43 of radio scanning. However, due to the step S42 of pre-selecting one or more of the accessible radio access technologies might already be excluded from the step S43 of radio scanning. This may be the case although one of the excluded radio access technologies actually provides good conditions due to the fact that it is part of a moving movable network, as for instance provided with a train or bus. This case especially appears in a situation where the method of the invention is carried out directly after switching on of the mobile terminal device while already moving at high speed on a vehicle that provides an access point or a network of a short range radio access technology.

### Fourth Embodiment:

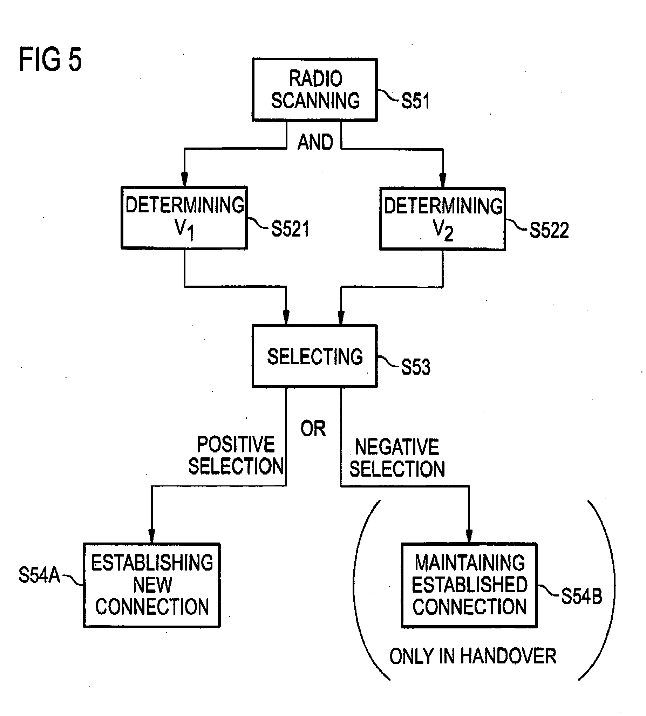

For such cases, a fourth embodiment of the method of the present invention is proposed and illustrated in Fig. 5. Here the access pre-selecting before the step S51 of radio scanning is missing and all accessible radio access technologies are to be scanned. Thereafter, the first and second quantity is determined in the steps S521 and S522, wherein the specific ordering of the steps S521 of determining the first quantity and S522 of determining the second quantity is not significant. The steps S521 and S522 might as well be performed simultaneously.

Then, the step S53 of selecting is carried out, leading to either a positive selection, i.e. establishing a new connection (step S54A) or a negative selection, i.e. maintaining an established connection in a handover process (step S54B). This is similar to the first embodiment as illustrated in Fig. 2 with the difference of the additional step S522 of determining the second quantity.

For all of the methods according to the first, second, third, and fourth embodiment it is proposed, that the first and the second quantity, when also determined on the method of the respective embodiment, relate to an averaged velocity of the mobile terminal device or the access point respectively. For instance, if the mobile terminal device is located on a bus and the bus temporarily stops at a bus stop, the mobile terminal device may choose to access select and perform a handover to an access point of a short range radio access technology close by because it provides better bandwidth than the already established connection. However, as the bus goes on again the connection has to be terminated again and it could have been better to not perform the handover in the first place. For preventing such kind of situations, the first and/or second quantity are not relating to a current velocity but rather to an averaged velocity. With this measure it is prevented that temporary slow downs, accelerations or stops influence the outcome of the access selection process according to the present invention in an unintended manner. Naturally, the feature that the second quantity relates to an averaged velocity can be only introduced if the second quantity is determined in the respective embodiment of the present invention. The time intervals that are chosen for the averaging of the velocities have to be accommodated to the requirements and properties of the respective radio access technologies and/or access points.

### Fifth Embodiment:

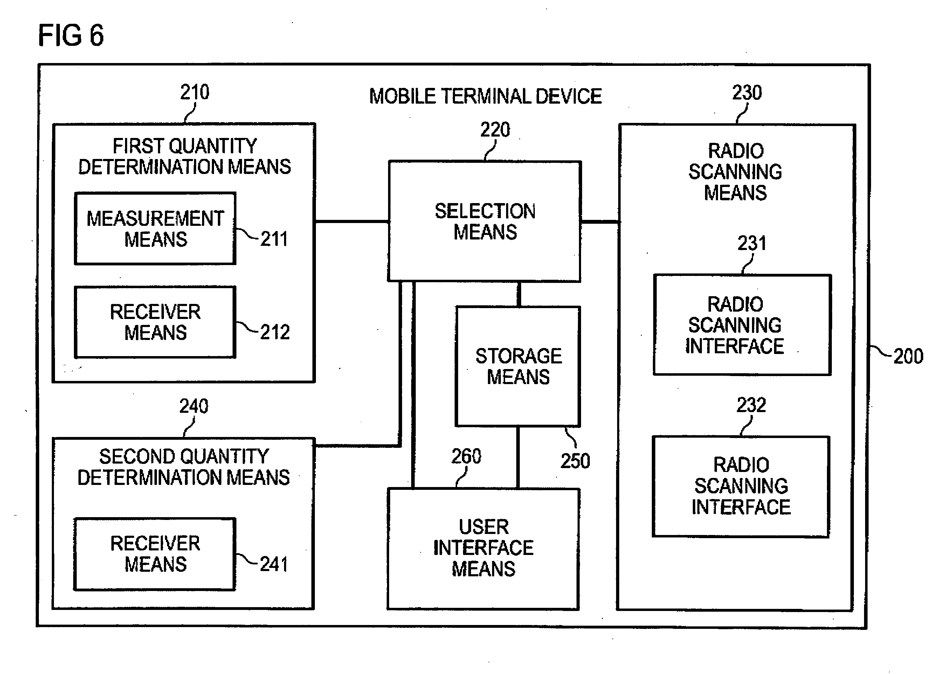

According to a fifth embodiment of the invention, a multi-access mobile terminal device 200 as illustrated in Fig. 6 is configured for connecting to a plurality of options for wireless access and performing an access selection process as in the method of the present invention according to any of the preceding embodiments. It is emphasized that the present invention is not limited to a mobile terminal device as described in the following, since it comprises features that are not necessary for carrying out all of the abovementioned embodiments of the method of the present invention. For instance a mobile terminal device comprising the first quantity selection means 210, the selection means 220, and the radio scanning means 230 already comprises all features necessary to carry out the method according to the first embodiment of the present invention.

The first quantity determination means 210 is configured to determine the first quantity V₁ relating to the velocity of the mobile terminal device. It communicates with the selection means 220 that performs the step of selecting and/or pre-selecting one or more of the options for wireless access as described in one of the methods of the abovementioned embodiments of the present invention. The first quantity determination means 210 comprises a measurement means 211 and/or a receiving means for determining the first quantity based on a measurement carried out by the measurement means 211 and/or based on an external signal received by the receiving means 212. The first quantity determination means 210 may also be part of a software realization and furthermore it may be configured for additionally averaging the determined velocity. The determined first quantity is communicated to the selection means 220 that is configured to carry out the steps of selecting and/or pre-selecting in at least one of the methods according to one of the abovementioned embodiments of the invention.

The mobile terminal device 200 further comprises a radio scanning means 230 communicating with the selection means 220. The radio scanning means further comprises at least two radio scanning interfaces 231 and 232 that allow for radio scanning of access points in the actual range of the mobile terminal device 200. Thereby, the radio scanning interface 231 is configured for radio scanning of access points of a radio access technology RAT1 and the radio scanning interface 232 is configured for radio scanning of access points of a radio access technology RAT2.

Furthermore, the radio access technology RAT2 is a short range radio access technology. This means that access points of RAT2 have smaller coverage areas than access points of RAT1 and additionally the radio access technology RAT2 only supports relative velocities between the mobile terminal device and the access points below a predetermined threshold value. It is emphasized that since the coverage areas of access points of the different radio access technologies have different ranges, the actual range of the mobile terminal device also has to be considered different for the two different radio access technologies.

The mobile terminal device 200 further comprises a second quantity determination means 240 for determining the second quantity relating to the velocity of an access point. The second quantity determination means 240 comprises at least one receiver means 241 for receiving an external signal relating to the second quantity. The second quantity determination means communicates with the selection means 220 to hand on the information relating to the determined second quantity. Furthermore, the second quantity determination means 240 could be part of a software realization and further may be configured to average a determined velocity so that the second quantity is relating to an averaged velocity of the mobile terminal device.

The mobile terminal device 200 further comprises a storage means 250 for storing selection and/or pre-selection rules for the step of selection or pre-selection according to the method of one of the abovementioned embodiments. The storage means 250 communicates with the selection means 220. The selection and/or pre-selection rules is accessible by the selection means 220 and may comprise recommendations for supported velocities of the different radio access technologies RAT1 and RAT2, velocity threshold values to be considered for the different radio access technologies RAT1 and RAT2, procedure rules, i.e. the sequence of steps of all methods according to the abovementioned embodiments of the invention and instructions when to follow these procedures. For instance the storage means may comprise different selection and/or pre-selection rules to be applied in the case of a switching on of the mobile phone at rest or above one of the threshold velocities, in case of a handover at rest or above one of the threshold velocities and so on. Furthermore, the storage means may comprise different selection and/or pre-selection rules depending on user preferences, operator settings, device settings or even device operation policies as for example "save time", "safe power", or "optimal bandwidth". The mobile terminal further comprises a user interface means 260 communicating with the storage means 250 and/or the selection means 220 for allowing the user of the mobile terminal device to choose or select preferences for one or more of the selection and/or pre-selection rules stored in the storage means 250.

### Sixth Embodiment

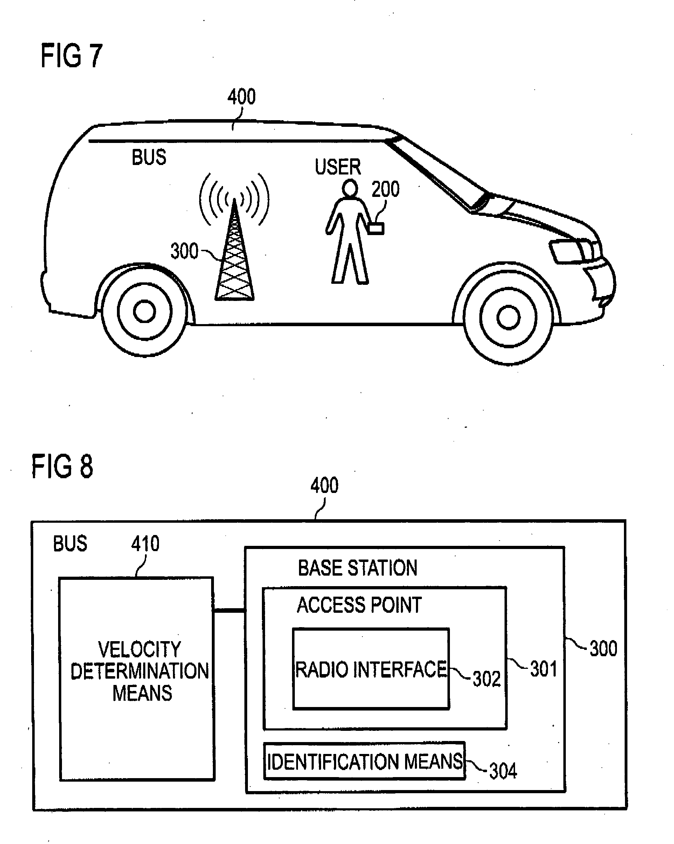

According to a sixth embodiment of the invention, a base station 300 is proposed to be attached to or integrated to a vehicle in order to provide a wireless movable network. As an implementation of this embodiment, the vehicle is for example a bus 400 as illustrated in Fig. 7. The base station 300 is attached to the bus. A user with a multi-access mobile terminal device 200 is travelling with the bus 400. As long as the user stays on the bus, the relative velocity between the mobile terminal device 200 and the base station 300 is either zero or below the speed of walk.

The base station 300 provides an access point 301 allowing for the multi-access mobile terminal device 200 to access the access point 301, wherein a radio interface means 302 provided with the base station 300 is transmitting a signal comprising the second quantity V₂, related to a velocity of the base station 300 and the access point 301. Further, the access point 301 provides access with a short range radio access technology such as WLAN, which is suitable for covering vehicles like a bus. If applied to a train, more base stations 300 could be required to provide access to the wireless network throughout the train.

The information that the base station 300 is part of a moving network is transmitted to the mobile terminal device 200 by the signal from the radio interface 302 that is comprised within the access point 301 and/or in a bit (for example "1" for movable network) that is part of the system specification signal, the system specification signal being the signal that is picked up by the mobile terminal device 200 in the step of radio scanning in the method of the present invention.

Or, according to an alternative embodiment, a base station 300 of a movable network is identified by the presence of an identification means 304 that is comprised in the base station independent of the access points. The identification means 304 is either transmitting a signal similar to the radio interface 302 or it is realized as a radio frequency identification (RFID) chip. RFID is a very short range technology and consequently, in this alternative embodiment a mobile terminal device could be informed without large complexity that it is entering or leaving the coverage area of a movable network. Furthermore, the user of the terminal device can be informed through the user interface means of the mobile terminal device that the mobile terminal is in the range of a movable network to select or modify selection or pre-selection rules accommodated to the situation.

In a further alternative embodiment of the base station 300, the signal transmitted from the radio interface 302 comprises the information if the base station is moving or not by containing the information of a second quantity relating to the velocity of the base station. The velocity of the base station is corresponding to the velocity of the bus 400 that is determined by a velocity determination means 410 which is part of the bus 400. The velocity determinations means 410 is communicating with the base station, in order to make the second quantity accessible and/or determinable to the base station.

The signal that comprises the second quantity V₂ can be received or picked up by a second quantity determination means 240 of a mobile terminal device or can be used in the step of selecting of pre-selecting according to at least one the abovementioned embodiments of the present invention.

The second quantity is either a Boolean variable "0" or "1" denoting if the base station is moving or at rest, or even if the base station moves at a velocity larger or smaller than a predetermined threshold value. Alternatively, the second quantity can also relate to the current velocity, an estimate of the velocity, a measurement of the velocity or even an averaged value of the velocity of the base station. It can further relate to an absolute value of the velocity and/or comprise directional information.

The specifications and drawings are to be regarded in an illustrative rather than a restrictive sense. It is evident that various modifications and changes may be made thereto, without departing from the scope of the invention as set forth in the claims. It is possible to combine the features described in the embodiments in a modified way for providing additional embodiments that are optimized for a certain usage scenario. As far as such modifications are readily apparent for a person skilled in the art, these modifications shall be regarded as implicitly disclosed by the above described embodiments.

## Claims

1. A method for an access selection process of a multi-access mobile terminal device located within a wireless multi-access enabled network environment providing one or more options for wireless access for the mobile terminal device,
comprising the steps of:
- determining a first quantity V₁ relating to a velocity of the mobile terminal device; and
- selecting or pre-selecting one or more of the options for wireless access depending on the determined first quantity V₁.

2. A method according to claim 1, wherein the options for wireless access comprise at least two different access points.

3. A method according to claim 2, wherein at least two of the different access points provide access with different radio access technologies.

4. A method according to at least one of claims 1 to 3, further comprising a step of radio scanning one or more of the options for wireless access, wherein the step of radio scanning is based on the step of pre-selecting.

5. A method according to claim 4, wherein the step of pre-selecting comprises an exclusion or inclusion of one or more radio access technologies from or to the step of radio scanning.

6. A method according to claim 4 or 5, wherein the step of pre-selecting comprises an evaluation of one or more radio access options and a determination of a scanning sequence of access options for the step of radio scanning based on the evaluation.

7. A method according to at least one of claims 1 to 6, wherein specific velocity range recommendations for the radio access technologies are considered in the step of selecting or pre-selecting.

8. A method according to at least one of claims 1 to 7, wherein the first quantity V₁ is relating to an average value of the velocity of the mobile terminal device.

9. A method according to at least one of claims 1 to 8, further comprising the step of determining a second quantity V₂ relating to a velocity of an access point, wherein the step of pre-selecting or selecting is depending on the first quantity V₁ and the second quantity V₂.

10. A method according to claim 9, wherein the second quantity V₂ is relating to an average value of the velocity of the access point.

11. A multi-access mobile terminal device being configured for connecting to a plurality of options for wireless access, comprising:
- a first quantity determination means (210) for determining a first quantity V₁ relating to a velocity of the mobile terminal device (200); and
- a selection means (220), communicating with the first quantity determination means (210), for selecting or pre-selecting one or more of the options for wireless access depending on the determined first quantity V₁.

12. A multi-access mobile terminal device according to claim 11, wherein the options for wireless access comprise at least two different access points.

13. A multi-access mobile terminal device according to claim 12, wherein at least two of the different access points provide access with different radio access technologies.

14. A multi-access mobile terminal device according to at least one of claims 11 to 13, further comprising at least one radio scanning means (230), communicating with the selection means (220), for radio scanning of the options for wireless access.

15. A multi-access mobile terminal device according to claim 14, wherein at least one radio scanning means (230) comprises at least two radio scanning interfaces (231,232), wherein each of the radio scanning interfaces (231,232) is configured to radio scan for one of the different radio access technologies.

16. A multi-access mobile terminal device according to at least one of claims 11 to 15, wherein the first quantity determination means (210) comprises a measurement means (211) for determining the first quantity V₁ based on a measurement of the velocity of the mobile terminal device (200).

17. A multi-access mobile terminal device according to at least one of claims 11 to 16, further comprising a second quantity determination means (240) communicating with the selection means (220), for determining a second quantity V₂ relating to a velocity of one or more access points in the actual access range of the mobile terminal device (200), wherein the selection means (220) selects or pre-selects one or more of the options for wireless access based on the first quantity V₁ and the second quantity V₂, and wherein the second quantity determination means (240) comprises a receiving means (241) or communicates with at least one of the radio scanning interfaces for receiving an external signal from at least one of the access points relating to the second quantity V₂.

18. A base station providing one or more access points allowing for one or more multi-access mobile terminal devices according to claim 17 to access one or more of the access points (301), wherein a radio interface means (302) being provided with the base station (300) is transmitting a signal comprising the second quantity V₂, related to a velocity of the base station (300) and the access points (301) being provided with the base station (300).

19. A base station according to claim 18, wherein the signal further comprises the information if the bases station (300) with the access points (301) is part of a movable network.
